## Europäisches Patentamt
## European Patent Office
## Office européen des brevets

(19)

(11) Veröffentlichungsnummer : **0 043 034
B1**

# (12) EUROPÄISCHE PATENTSCHRIFT

(45) Veröffentlichungstag der Patentschrift :
07.12.83

(21) Anmeldenummer : 81104675.4

(22) Anmeldetag : 17.06.81

(51) Int. Cl.³ : **C 03 B 9/28**, C 03 B 9/195,
C 03 B 9/353

(54) Transporteinheit für Mündungsformen einer Hohlkörperherstellungsmaschine.

(30) Priorität : 28.06.80 DE 3024428

(43) Veröffentlichungstag der Anmeldung :
06.01.82 Patentblatt 82/01

(45) Bekanntmachung des Hinweises auf die Patenterteilung : 07.12.83 Patentblatt 83/49

(84) Benannte Vertragsstaaten :
AT BE CH FR GB IT LI LU NL SE

(56) Entgegenhaltungen :
DE-A- 1 596 472
US-A- 3 834 884

(73) Patentinhaber : HERMANN HEYE
Allee
D-3063 Obernkirchen (DE)

(72) Erfinder : Seidel, Hans-Georg
Gerhart-Hauptmann-Weg 7
D-3260 Rinteln (DE)

(74) Vertreter : Kosel, Peter, Dipl.-Ing. et al
Patentanwälte Dipl.-Ing. Horst Röse Dipl.-Ing. Peter
Kosel Postfach 129 Odastrasse 4a
D-3353 Bad Gandersheim (DE)

EP 0 043 034 B1

Transporteinheit für Mündungsformen einer Hohlkörperherstellungsmaschine

Die Erfindung betrifft eine Transporteinheit für wenigstens eine ein hälftig geteiltes Mündungswerkzeug aufweisende, entlang einer Bahn bewegbare Mündungsform einer Maschine zur Herstellung von Hohlkörpern aus Glas oder ähnlichen thermoplastischen Stoffen, wobei jede Mündungswerkzeughälfte an einer Mündungswerkzeughalterhälfte aufgehängt ist und jede Mündungswerkzeughalterhälfte gegenüber Führungsstangen eines Transportelements durch Antriebselemente zwischen einer geschlossenen und einer geöffneten Endstellung verschiebbar gelagert und durch einen Verriegelungsmechanismus in den Endstellungen verriegelbar ist.

Bei bekannten Transporteinheiten dieser Art (DE-PS 1 596 472 (Fig. 7 bis 16) der Anmelderin und DE-AS 1 704 112 (Fig. 8 bis 10) der Anmelderin) sind die Mündungswerkzeughalterhälften jeweils unmittelbar auf den Führungsstangen verschiebbar gelagert. Austausch, Reparatur und Wartung der Mündungswerkzeughalterhälften und der Mündungsformen sind zeitaufwendig und führen zu unerwünschter Stillsetzung der Maschine.

Der Erfindung liegt die Aufgabe zugrunde, die Transporteinheit und ihre Funktion zu verbessern und durch die Transporteinheiten bedingte Stillstandszeiten der Maschine weitgehend zu vermeiden.

Diese Aufgabe ist nach der Erfindung dadurch gelöst, daß jede Mündungswerkzeughalterhälfte mit einem auf den Führungsstangen verschiebbar gelagerten Schlitten lösbar verbunden ist. Zu Umstellungs-, Austausch-, Reparatur- und Wartungsarbeiten an den Mündungsformen und den Mündungswerkzeughalterhälften können die Mündungswerkzeughalterhälften von den Schlitten abgenommen und auf die Schlitten aufgehängt werden. Dadurch ist eine ganz erhebliche Arbeitserleichterung und Arbeitszeitverkürzung erreicht. Die Stillstandszeiten der Maschine sind jeweils minimal. Jede Stillsetzung einer Maschine bringt außer Produktionsverlust in den betroffenen Stationen auch thermische Probleme. Die Maschine gerät aus dem thermischen Gleichgewicht, das in einem nachfolgendem Anfahrvorgang erst wiederhergestellt werden muß, bevor der eigentliche Maschinenbetrieb wieder aufgenommen werden kann. Diese Nachteile sind erfindungsgemäß weitestgehend vermieden.

Nach einer Ausführungsform der Erfindung greifen die Antriebselemente an den Schlitten an. Dadurch lassen sich die Mündungswerkzeughalterhälften besonders leicht und schnell von den Schlitten abkuppeln oder mit den Schlitten kuppeln.

Eine besonders einfache und zeitsparende Entkupplung und Kupplung erhält man, wenn jede Mündungswerkzeughalterhälfte mit Haken auf den Schlitten gehängt und durch Positioniermittel relativ zu dem Schlitten fixiert ist.

Nach einer Ausführungsform der Erfindung weisen die Positioniermittel axiale Anschlagschultern des Schlittens und einen zwischen der Mündungswerkzeughalterhälfte und dem Schlitten wirksamen Verriegelungsbolzen auf. Zum Aushängen der Mündungswerkzeughalterhälfte wird jeweils der zugehörige Verriegelungsbolzen von Hand gelöst und die Mündungswerkzeughalterhälfte einfach vom Schlitten abgehoben.

Nach einer anderen Ausführungsform der Erfindung weist jede Mündungswerkzeughalterhälfte ein mit den Führungsstangen verbindbares Kupplungsteil aus einem Werkstoff von verhältnismäßig hoher Festigkeit und ein mit dem Kupplungsteil verbindbares Halteteil auf. Das Kupplungteil kann z. B. aus Sphäroguß und das Halteteil aus einer Aluminiumlegierung bestehen. So kann das verhältnismäßig hohen spezifischen Belastungen ausgesetzte Kupplungsteil insbesondere im Bereich der Kupplung mit dem Schlitten, vor Verformungen und anderen Beschädigungen bewahrt werden.

Nach einer anderen Ausführungsform der Erfindung ist jede Führungsstange in ihrer Längsmitte in einem Lager des Transportelements gehalten. Durch diese « Außenlagerung » der Schlitten weist die Transporteinheit in der Verschieberichtung der Mündungswerkzeughalterhälften nur minimale Baumaße auf. Dies ist bei bestimmten Maschinen mit verhältnismäßig wenig freiem Raum von großem Vorteil.

Eine besonders gute Führung bei geringen Abmessungen ergibt sich, wenn erfindungsgemäß jeder Schlitten mit jeweils einer Führungsbuchse auf jeder Führungsstange gleitet.

Nach einer weiteren Ausführungsform der Erfindung sind die Schlitten durch wenigstens eine Schließfeder in ihre die wenigstens eine Mündungsform schließende Stellung vorgespannt. So ist gewährleistet, daß sich auch nach dem Einbau der Mündungsformen und dem Einrichten der Maschine keine Mündungswerkzeughalterhälften in geöffneter Stellung unbeabsichtigt durch die Maschine bewegen und mit anderen Maschinenteilen kollidieren können.

Nach einer Ausführungsform der Erfindung ist jeweils eine Schließfeder zwischen einem Lager des Transportelements und dem benachbarten Schlitten, z. B. konzentrisch mit einer der Führungsstangen, angeordnet. Dies ist eine kostensparende Konstruktion für den Fall, daß jede Führungsstange an jedem Ende in einem Lager des Transportelements gehalten ist.

Nach einer anderen Ausführungsform der Erfindung ist bei der vorerwähnten « Außenlagerung » der Schlitten jede Führungsstange rohrförmig ausgebildet und nimmt in ihrem Innenraum eine Schließfeder auf, die jeweils an ein äußeres Ende der Schlitten angeschlossen ist. So ist nur eine Schließfeder an jeder Führungsstange erforderlich und geschützt vor äußeren Einflüssen angeordnet.

Eine andere Ausführungsform der Erfindung ist dadurch gekennzeichnet, daß die Antriebselemente eine in dem Transportelement drehbar gelagerte Welle aufweisen, die einerseits über einen Hebel eine durch wenigstens ein an der Maschine geführtes, durch einen Hubmechanismus heb- und senkbares Kurvenstück betätigbare Antriebsrolle und andererseits eine mit zwei symmetrisch zur Längsachse der Welle angeordneten Schaltzapfen ausgerüstete Schaltplatte trägt, und daß an jedem Schaltzapfen und an dem zugehörigen Schlitten unter Zwischenschaltung eines Federelements ein U-förmiger Bügel angelenkt ist, wobei Schenkel der Bügel zueinandergekehrt und ineinanderschachtelbar sind. Dies ist eine sehr betriebssichere Konstruktion, die auch die Verriegelung der Mündungswerkzeughalterhälften in der geschlossenen Endstellung dadurch ermöglicht, daß die Bügel in an sich bekannter Weise (DE-AS 1 704 112, Fig. 9) während ihrer Schließbewegung über die Verbindungsebene der Längsachsen der beiden Schaltzapfen hinaus ineinanderschwenken.

Nach einer weiteren Ausführungsform der Erfindung weist jedes Federelement einen dem zugehörigen Bügel durchdringenden Bolzen mit einem auf dem zugehörigen Schaltzapfen gelagerten Auge auf, wobei zwischen dem Bolzen und dem Bügel eine den Bügel auf Zug belastende Federanordnung vorgesehen ist. Die Federanordnung kann vorzugsweise aus einem Tellerfederpaket bestehen, das bei kurzen Federwegen vergleichsweise hohe Federkräfte liefert, die zur sicheren Verriegelung der Schlitten und damit der Mündungswerkzeughalterhälften in ihrer geschlossenen Stellung erwünscht sind.

Die Erfindung wird nachfolgend anhand der in den Zeichnungen dargestellten Ausführungsbeispiele näher erläutert. Es zeigen :

Figur 1 die Draufsicht auf eine für Doppelformbetrieb ausgerüstete Transporteinheit ohne Mündungsformen,

Figur 2 die Schnittansicht nach Linie II-II in Fig. 1, jedoch mit eingesetzten Mündungsformen,

Figur 3 die Stirnansicht gemäß Linie III-III in Fig. 1,

Figur 4 die Stirnansicht gemäß Linie IV-IV in Fig. 1,

Figur 5 die Schnittansicht nach Linie V-V in Fig. 2,

Figur 6 die Schnittansicht nach Linie VI-VI in Fig. 3,

Figur 7 die Schnittansicht nach Linie VII-VII in Fig. 1 mit eingesetzter Mündungsform,

Figur 8 eine teilweise geschnittene Seitenansicht eines Schlittens,

Figur 9 die teilweise geschnittene Ansicht gemäß Linie IX-IX in Fig. 8,

Figur 10 ein Kupplungsteil einer Mündungswerkzeughalterhälfte,

Figur 11 die Seitenansicht gemäß Linie XI-XI in Fig. 10,

Figur 12 die Schnittansicht gemäß Linie XII-XII in Fig. 10,

Figur 13 die Draufsicht gemäß Linie XIII-XIII in Fig. 10, jedoch um 90° gedreht, und

Figur 14 eine teilweise geschnittene Ansicht einer anderen Ausführungsform der Transporteinheit.

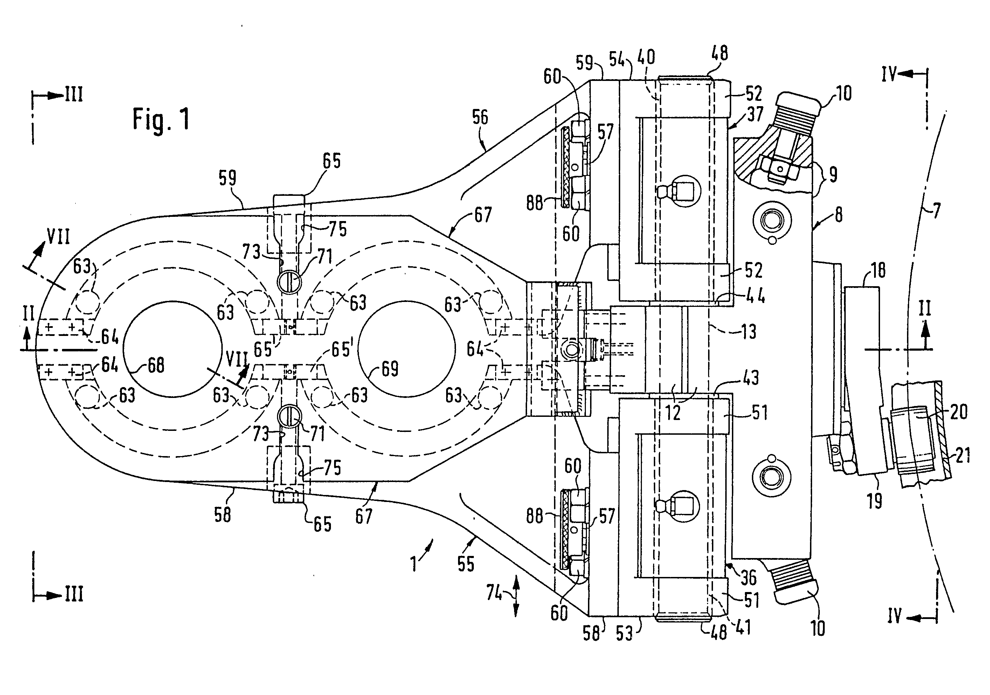

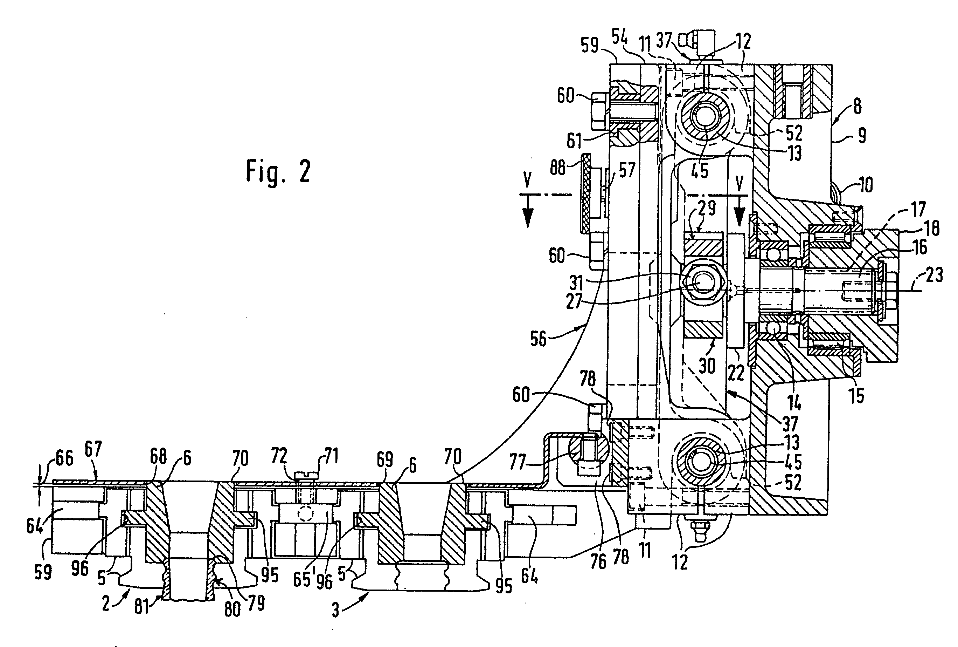

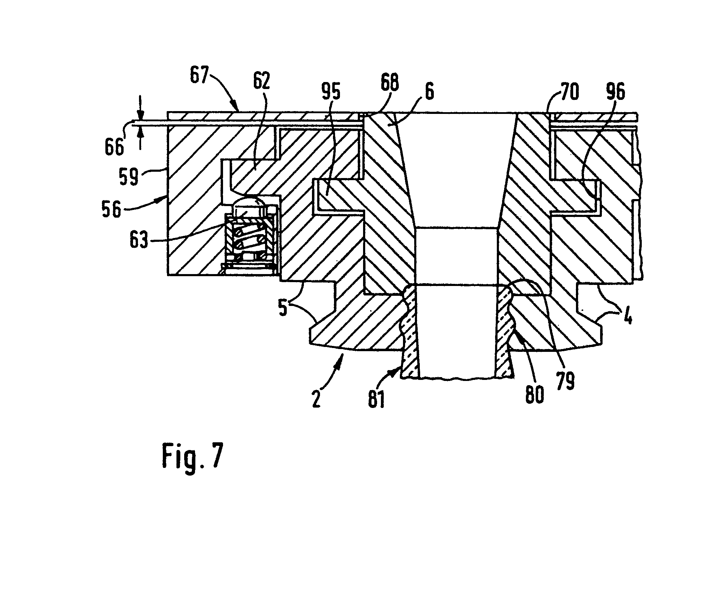

Fig. 1 zeigt eine Transporteinheit 1 für zwei Mündungsformen 2 und 3, die jeweils zwei Mündungswerkzeughälften 4 und 5 und einen darin aufgehängten ungeteilten Führungsring 6 aufweisen (vgl. Fig. 2 und 7). Die Transporteinheit 1 bewegt sich entlang einer kreisförmigen Bahn 7 z. B in der Weise, die in der DE-AS 1 704 112 der Anmelderin im einzelnen offenbart ist.

Dabei ist ein Transportelement 8 der Transporteinheit 1 an einem nicht dargestellten Transportarm einer zugehörigen Glasformmaschine auf einer zu der Bahn 7 konzentrischen kreisförmigen Bahn geführt. Ein Rahmen 9 des Transportelements 8 weist zu beiden Seiten in Richtung der Bewegungsbahn vorragende Puffer 10 auf, die eine eventuelle Berührung mit den angrenzenden Transportelementen 8 dämpfen sollen. Gemäß der vorerwähnten DE-AS 1 704 112 sind nämlich die einzelnen Transporteinheiten 1 der Glasformmaschine unabhängig voneinander auf der Bahn 7 bewegbar.

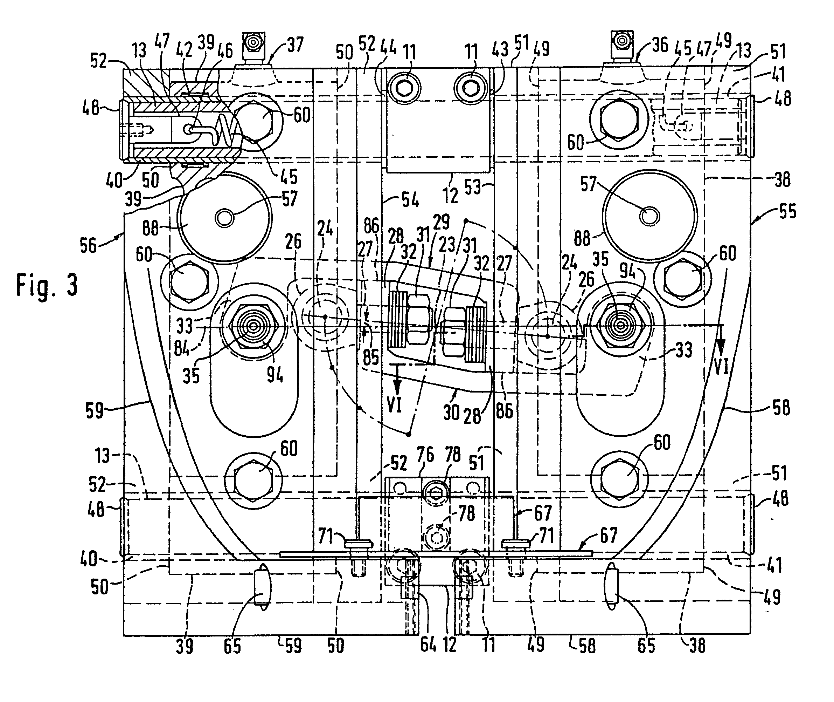

Der Rahmen 9 trägt oben und unten in der Mitte jeweils ein durch Schrauben 11 (Fig. 2 und 3) klemmbares Lager 12 zur Fixierung einer zu beiden Seiten des Lagers 12 herausragenden, rohrförmigen Führungsstange 13.

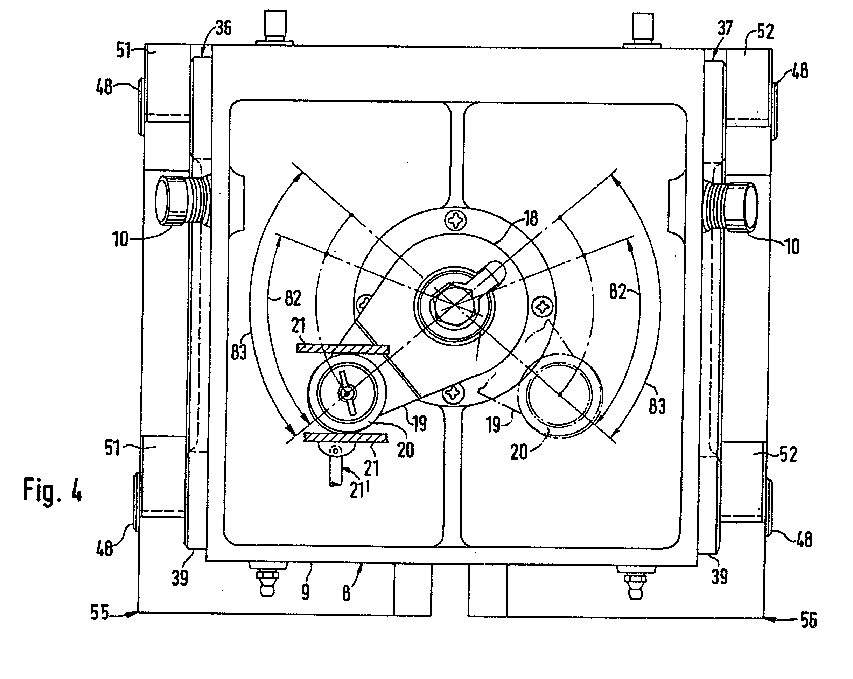

Wie Fig. 2 besonders deutlich zeigt, ist in dem Rahmen 9 über Wälzlager 14 und 15 eine Welle 16 drehbar gelagert, deren äußeres Ende über eine Verschraubung 17 eine Nabe 18 eines Hebels 19 (Fig. 1 und 4) trägt. An dem freien Ende des Hebels 19 ist eine Antriebsrolle 20 drehbar gelagert, die durch ein im Querschnitt U-förmiges, durch einen Hubmechanismus 21′ (Fig. 4), z. B. eine doppeltwirkende Kolben-Zylinder-Einheit, heb- und senkbares Kurvenstück 21 betätigbar ist. Solche Kurvenstücke 21 brauchen nur an denjenigen Stellen der Bahn 7 vorgesehen zu sein, an denen die Mündungswerkzeughälften 4, 5 geöffnet werden sollen. Normalerweise wird dies nur in einer Abgabestation der Glasformmaschine der Fall sein, in der die fertigen Hohlkörper aus den Mündungsformen 2, 3 abgegeben werden.

An dem anderen Ende der Welle 16 ist eine Schaltplatte 22 befestigt, von der aus sich in Fig. 2 nach links zwei symmetrisch zu einer Längsachse 23 der Welle 16 angeordnete Schaltzapfen 24 (Fig. 3) erstrecken (vgl. auch Fig. 6). Auf jedem der Schaltzapfen 24 ist gemäß Fig. 6 mit einem Nadellager 25 ein Auge 26 eines Bolzens 27 gelagert, der einen Schenkel 28 eines U-förmigen Bügels 29 oder 30 durchdringt und an seinem freien, mit Gewinde versehenen Ende eine Mutter 31 trägt. Zwischen der Mutter 31 und dem Schenkel 28 ist eine den Bügel 29 oder 30 auf Zug belastende, ein Tellerfederpaket aufweisende Federanordnung 32 vorgesehen.

Ein anderer Schenkel 33 jedes Bügels 29, 30 ist über ein Nadellager 34 (Fig. 6) an einem Zapfen 35 gelagert, der an einem Schlitten 36 und 37 befestigt ist.

Die Schlitten 36, 37 weisen jeweils einen Rahmen 38 und 39 auf, der jeweils mit einer Führungsbuchse 40 and 41 (Fig. 3) auf beiden Führungsstangen 13 verschiebbar gelagert ist. Der Rahmen 38, 39 und die Führungsbuchsen 40, 41 sind jeweils durch Toleranzringe 42 relativ zueinander fixiert. Jede Führungsbuchse 40, 41 ist mit einem Ringflansch 43 und 44 versehen, die in der in den Fig. 1, 3 und 4 dargestellten geschlossenen Stellung der Transporteinheit jeweils an dem zugehörigen Lager 12 des Transportelements 8 anliegen und damit den Schließweg der Schlitten 36, 37 begrenzen.

Die Schlitten 36, 37 sind in ihre Schließstellung gemäß Fig. 3 durch zwei Schließfedern 45 vorgespannt, von denen eine in jeder der Führungsstangen 13 angeordenet ist. Jede Schließfeder 45 ist mit einem Endhaken 46 in eine Öse 47 eingehängt, die an einem am äußeren Ende der zugehörigen Führungsbuchse 40, 41 abgestützten Deckel 48 befestigt ist.

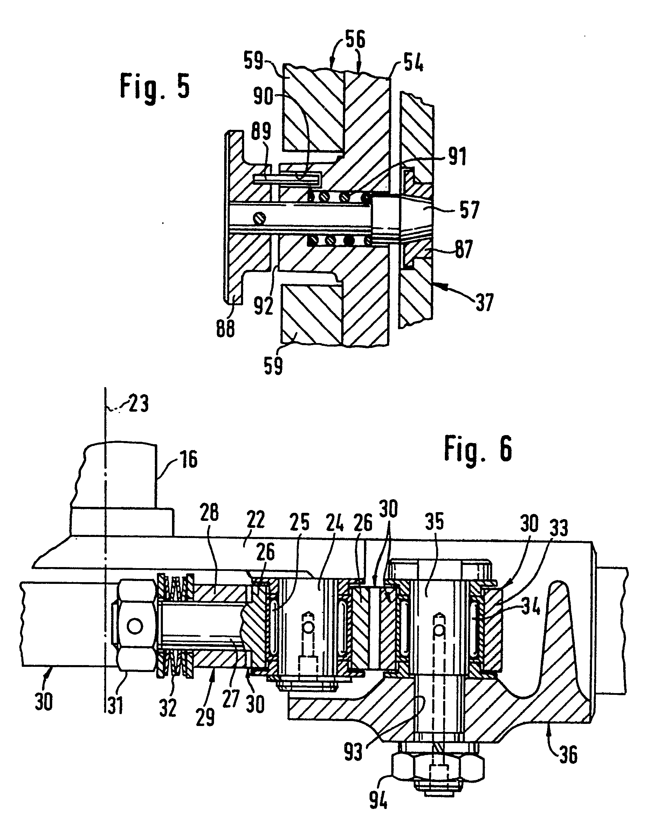

Jeder Schlitten 36, 37 weist vier Anschlagschultern 49 und 50 auf, die zur axialen Positionierung von vier Haken 51 und 52 von Kupplungsteilen 53 und 54 (vgl. Fig. 2) von Mündungswerkzeughalterhälften 55 und 56 auf den Schlitten 36, 37 dienen. Die Kupplungsteile 53 und 54 sind aus Sphäroguß hoher Festigkeit hergestellt und mit den Haken 51, 52 angrenzend an die Anschlagschultern 49, 50 auf die Führungsbuchsen 40, 41 aufgehängt. Um ein Herunterfallen der Kuplungsteile 53, 54 von den Schlitten 36, 37 zu verhindern, ist jede Mündungswerkzeughalterhälfte 55, 56 mit einem Verriegelungsbolzen 57 ausgerüstet, dessen Einzelheiten im Zusammenhang mit Fig. 5 noch beschrieben werden.

Jede Mündungswerkzeughalterhälfte 55, 56 weist ferner ein insgesamt L-förmiges Halteteil 58 und 59 auf, das mit jeweils drei Schrauben 60 gemäß Fig. 2 an den Kupplungsteilen 53, 54 befestigt ist. Die Halteteile 58, 59 bestehen zur Gewichtsersparnis aus einer geeigneten Aluminiumlegierung. Die Schrauben 60 durchqueren jeweils eine in das Halteteil 58, 59 eingesetzte Buchse 61 mit Spiel in senkrechter Richtung. Dieses Spiel gestattet eine senkrechte Einstellung des Halteteils 58, 59 gegenüber seinem Kupplungsteil 53, 54 zum Toleranzausgleich.

Da die Transporteinheit 1 im Doppelformbetrieb eingesetzt wird, sind in jedes Halteteil 58, 59 zwei Mündungswerkzeughälften 4, 4 bzw. 5, 5 der Mündungsformen 2, 3 eingehängt. Jede Mündungswerkzeughälfte 4, 5 liegt gemäß Fig. 7 mit einem äußeren Flansch 62 auf zwei Federelementen 63 auf (vgl. Fig. 1), die die Mündungsformen 2, 3 in eine obere Endstellung gemäß Fig. 7 vorspannen. Jede Mündungswerkzeughälfte 4, 5 ist ferner in Umfangsrichtung durch ein festes Anschlagstück 64 und ein durch eine Schraube 65 schwenkbares Anschlagstück 65′ fixiert.

Im Bereich der Mündungsformen 2, 3 ist mit einem geringen senkrechten Abstand 66 (Fig. 2) oberhalb der Halteteile 58, 59 eine als Blech ausgebildete Zentriervorrichtung 67 angeordnet. Die Zentriervorrichtung weist Durchbrechungen 68 und 69 auf, durch die ein Außenabschnitt 70 jedes Führungsrings 6 hindurchragt und in seitlicher Richtung geführt ist. In jedes Halteteil 58, 59 ist von oben eine Schraube 71 eingedreht, deren Kopf die Zentriervorrichtung 67 in der z. B. in Fig. 2 gezeigten Betriebsstellung hält. Ein Schaft 72 der Schraube 71 ist in einem Schlitz 73 der Zentriervorrichtung 67 bewegbar. Der Schlitz erstreckt sich von einer Außenseite der Zentriervorrichtung 67 parallel zu einer in Fig. 1 durch einen Pfeil gekennzeichneten Verschieberichtung 74 der Mündungswerkzeughalterhälften 55, 56. Der Schlitz 73 weist außen eine Verbreiterung 75 auf, die den Kopf der Schraube 71 dann passieren läßt, wenn die Mündungswerkzeughalterhälften 55, 56 auseinandergefahren worden sind und die Zentriervorrichtung 67 um eine in einem Schwenklager 76 gelagerte Schwenkachse 77 hochgeschwenkt wird. Das Schwenklager 76 ist mit Schrauben 78 (Fig. 2 und 3) an dem unteren Lager 12 des Transportelements 8 befestigt. Die Schwenkachse 77 kann sich in axialer Richtung nicht bewegen, so daß die Mündungsformen 2, 3 zentriert sind.

Fig. 2 zeigt, daß der Führungsring 6 jeweils einen obersten Bereich 79 einer Mündung 80 eines Hohlkörpers 81, in diesem Fall einer Glasflasche, formt. Zur Verdeutlichung ist in der Mündungsform 3 in Fig. 2 der Hohlkörper fortgelassen.

Sollen aus der in den Fig. 3 und 4 dargestellten geschlossenen Stellung die Mündungswerkzeughalterhälften 55, 56 geöffnet werden, wird das Kurvenstück 21 (Fig. 1 und 4) mittels des Hubmechanismus 21′ angehoben. Dadurch wird die Antriebsrolle 20 angehoben und schwenkt den Hebel 19 gemäß Fig. 4 im Uhrzeigersinn um einen Winkel, dessen minimaler Wert in Fig. 4 mit 82 und dessen maximaler Wert mit 83 bezeichnet sind. Die Größe dieses Schwenkwinkels muß ausreichen, um bei der Öffnung der Mündungswerkzeughälften 4, 5 die Mündung 80 freizugeben, damit der Hohlkörper 81 aus der Mündungsform 2, 3 freikommt.

Die vorerwähnte Schwenkung des Hebels 19 hat gemäß Fig. 3 eine Schwenkung der Schaltzapfen 24, 24 um den gleichen Winkelbetrag im Gegenuhrzeigersinn zur Folge. Dabei lösen sich die Bügel 29, 30 aus ihrer gegenseitigen Anschlagstellung und treiben die Schlitten 36, 37 zunehmend nach außen, bis die geöffnete Endstellung der Mündungswerkzeughalterhälften 55, 56 erreicht ist. Diese Öffnungsbewegung geschieht gegen die zunehmende Schließkraft der beiden Schließfedern 45.

Sobald das Kurvenstück 21 wieder gesenkt wird, schwenkt der Hebel 19 unter der Wirkung des oberen Schenkels des Kurvenstücks 21 und der Schließfedern 45 wieder zurück bis in die in Fig. 3 gezeichnete geschlossene Endstellung, in der die Mündungswerkzeughalterhälften 55, 56 verriegelt sind. Diese Verriegelung wird dadurch bewirkt, daß die Schaltzapfen 24, 24 gemäß Fig. 3 jeweils über eine Verbindungsebene 84 der Längsachsen der Zapfen 35 gegen die Kraft der Federanordnungen 32, 32 hinausgeschwenkt werden. Dazu würde die Schließkraft der beiden Schließfedern 45 nicht ausreichen. Die Verriegelung geschieht vielmehr durch den Formschluß zwischen dem oberen Schenkel des Kurvenstücks 21 und der Antriebsrolle 20. Fig. 3 zeigt, daß die Schaltzapfen 24, 24 in dieser verriegelten geschlossenen Endstellung um einen Winkel 85 über die Verbindungsebene 84 hinausgeschwenkt worden sind. In der verriegelten Endstellung liegen die Bügel 29, 30 jeweils mit einer Anschlagfläche 86 aneinander an und liegen die Ringflansche 43, 44 der Schlitten 36, 37 an dem oberen und unteren Lager 12 des Rahmens 9 des Transportelements 8 an.

Gemäß Fig. 5 greift ein konisches Ende des Verriegelungsbolzens 57 in eine komplementär konische Verriegelungsbuchse 87 ein, die in eine auf Passung bearbeitete Ausnehmung des Schlittens 37 eingesetzt ist. Der Verriegelungsbolzen 57 ist an seinem anderen Ende mit einem Handknopf 88 versehen, in dessen Innenseite ein Stützstift 89 befestigt ist. In der in Fig. 5 gezeigten verriegelten Stellung des Verriegelungsbolzens 57 greift der Stützstift 89 in eine Bohrung 90 des Kupplungsteils 54 ein. Wird der Handknopf 88 in Fig. 5 gegen die Kraft einer Druckfeder 91 nach links gezogen, bis der Stützstift 89 die Bohrung 90 verlassen hat, und dann geringfügig um seine Längsachse geschwenkt, kann das freie Ende des Stützstifts 89 auf einer Stützfläche 92 des Kupplungsteils 54 in einer Stellung abgesetzt werden, in der der Verriegelungsbolzen 57 sich außer Eingriff mit der Verriegelungsbuchse 87 befindet. In dieser Stellung kann die Mündungswerkzeughalterhälfte 56 von dem Schlitten 37 abgehoben werden.

Gemäß Fig. 6 ist jeder Zapfen 35 mit einem Teil kleineren Durchmessers in einer Bohrung 93 des Schlittens 36 geführt und darin durch eine Mutter 94 festgelegt.

Fig. 7 zeigt, daß der Führungsring 6 mit einem äußeren Ringflansch 95 in eine entsprechende Ringnut 96 der Mündungswerkzeughälften 4, 5 mit Spiel in Umfangsrichtung und in axialer Richtung eingreift.

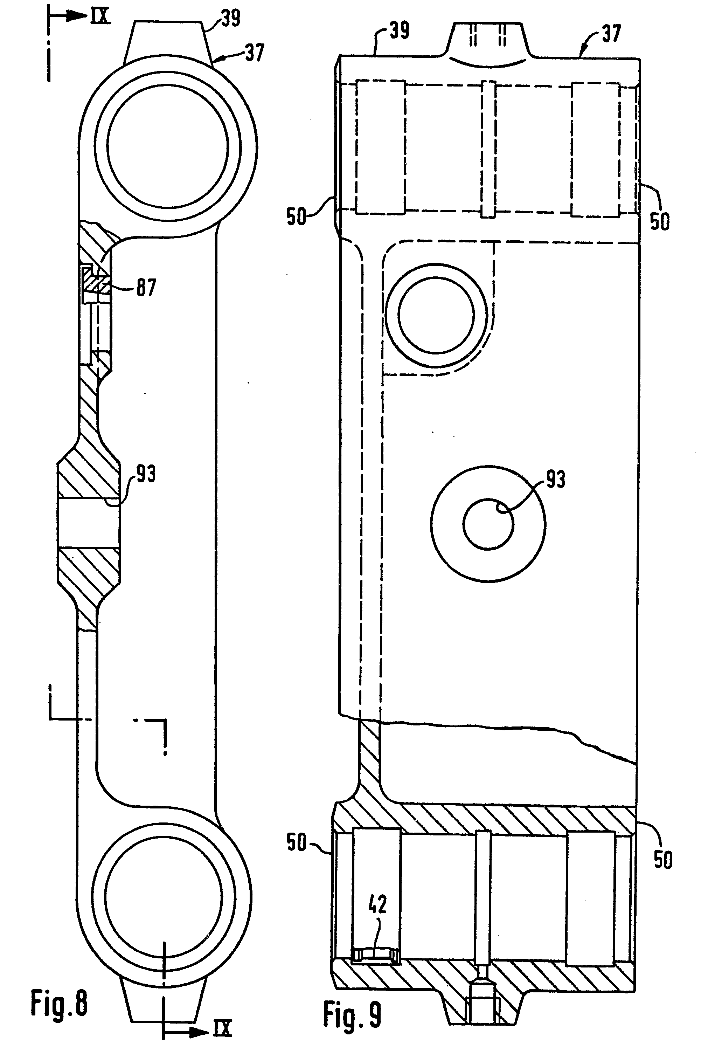

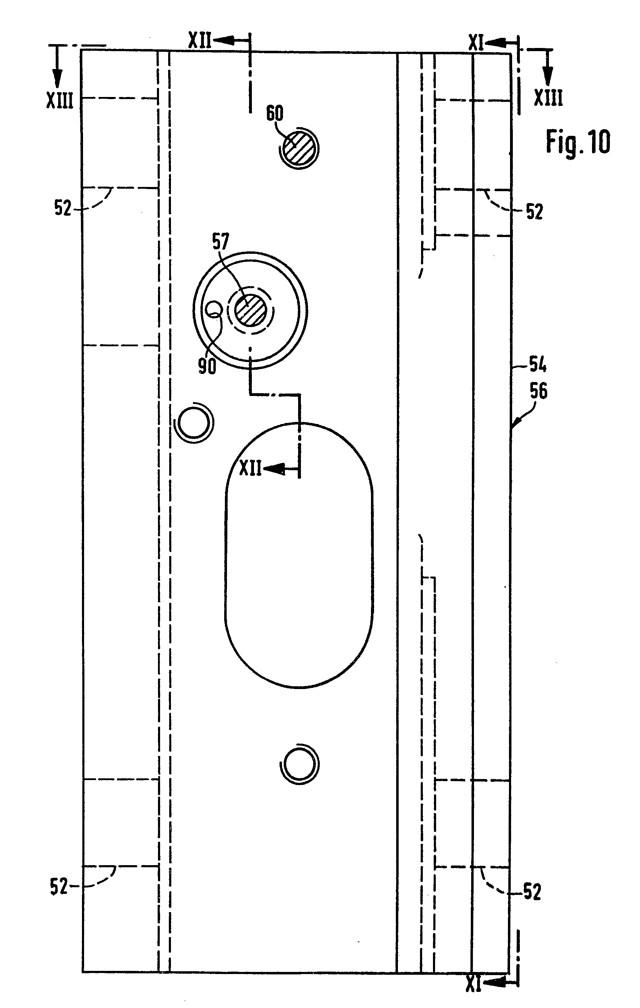

Die Figuren 8 und 9 zeigen Einzelheiten des Rahmens 39 des Schlittens 37.

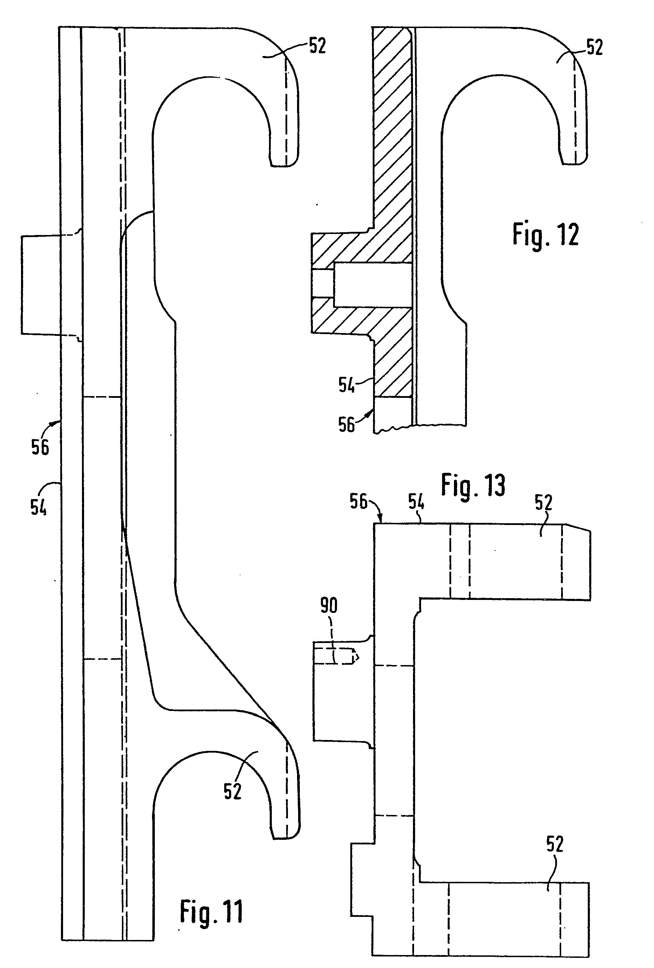

In den Figuren 10 bis 13 sind Einzelheiten des Kupplungsteils 54 der Mündungswerkzeughalterhälfte 56 dargestellt.

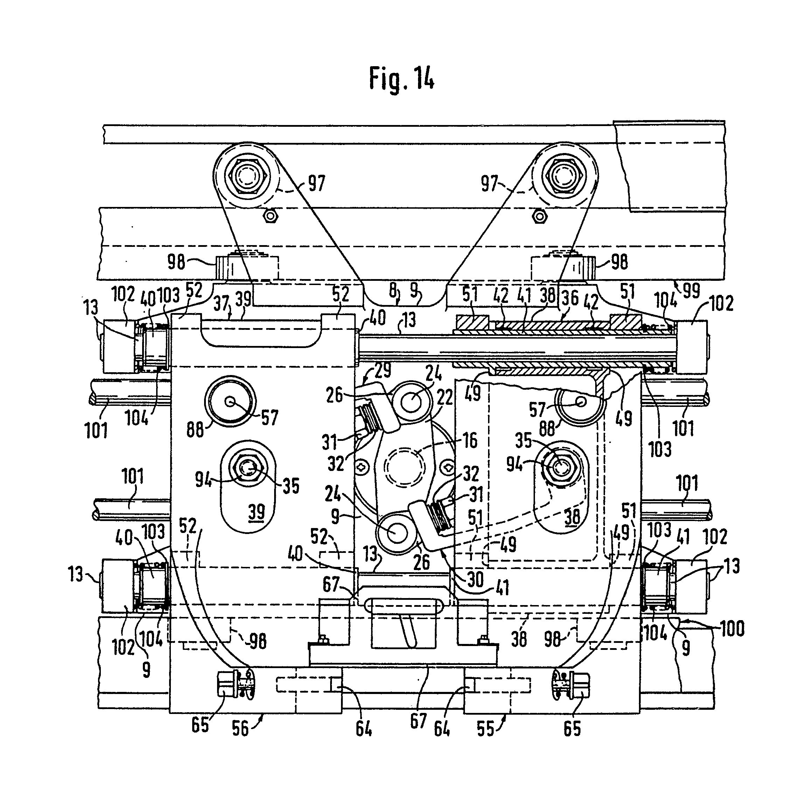

Bei dem Ausführungsbeispiel gemäß Fig. 14 sind gleiche Teile wie in den vorausgehenden Figuren mit gleichen Bezugszahlen versehen.

In Fig. 14 ist das Transportelement 8 als Wagen ausgebildet, der mit Tragrollen 97 und Führungsrollen 98 in einer oberen Schienenanordnung 99 und einer unteren Schiene 100 läuft. Das wagenartige Transportelement 8 ist Bestandteil einer Transportkette für die Mündungsformen einer Maschine die beispielsweise in der zuvor erwähnten DE-PS 1 596 472 der Anmelderin dargestellt und beschrieben ist. Auf jeder Seite des Rahmens 9 sind zwei Zugstangen 101 angelenkt, die als Verbindungselemente zu benachbarten Gliedern der Transportkette dienen. Die wagenartigen Transportelemente 8 müssen sich nicht auf einer kreisförmigen Bahn wie bei dem zuvor beschriebenen Ausführungsbeispiel bewegen. Die Bewegungsbahn kann vielmehr jede beliebige gewünschte Form annehmen.

Der Rahmen 9 weist vier Lager 102 auf, in denen jeweils ein Ende der Führungsstangen 13 gehalten ist. Es handelt sich hier also im Gegensatz zu dem zuvor beschriebenen Ausführungsbeispiel um eine Außenlagerung der Führungsstangen 13. Zwischen jedem Lager 102 und einem Stützring 103 der Führungsbuchsen 40, 41 ist eine als Druckfeder ausgebildete Schließfeder 104 angeordnet, die den zugehörigen Schlitten 36, 37 in seine geschlossene Stellung vorspannt.

Fig. 14 zeigt die Mündungswerkzeughalterhälften 55, 56 in ihrer voll geöffneten Stellung. Die Mündungswerkzeughalterhälften 55, 56 sind bei dem Ausführungsbeispiel gemäß Fig. 14 einstückig ausgebildet, bestehen also im Gegensatz zu dem zuvor beschriebenen Ausführungsbeispiel nicht aus einem Kupplungsteil und einem Halteteil. Diese einstückige Ausbildung der Mündungswerkzeughalterhälften 55, 56 ist dann zu empfehlen, wenn im Einfachformbetrieb mit nur einer Mündungsform je Transportelement 8 gearbeitet wird oder wenn bei Mehrfachformbetrieb mit mehreren Mündungsformen je Transportelement 8 die Grundfestigkeit des Werkstoffes für die Mündungswerkzeughalterhälften 55, 56 ausreichend hoch gewählt wird.

## Ansprüche

1. Transporteinheit (1) für wenigstens eine ein hälftig geteiltes Mündungswerkzeug aufweisende, entlang einer Bahn bewegbare Mündungsform (2 ; 3) einer Maschine zur Herstellung von Hohlkörpern aus Glas oder ähnlichen thermoplastischen Stoffen, wobei jede Mündungswerkzeughälfte (4 ; 5) an einer Mündungswerkzeughalterhälfte (55 ; 56) aufgehängt ist und jede Mündungswerkzeughalterhälfte (55 ; 56) gegenüber Führungsstangen (13) eines Transportelements (8) durch Antriebselemente (20, 19, 16, 22, 24, 27, 29, 30, 35) zwischen einer geschlossenen und einer geöffneten Endstellung verschiebbar gelagert und durch einen Verriegelungsmechanismus zumindest in der geschlossenen Endstellung verriegelbar ist, dadurch gekennzeichnet, daß jede Mündungswerkzeughalterhälfte (55 ; 56) mit einem auf den Führungsstangen (13) verschiebbar gelagerten Schlitten (36 ; 37) lösbar verbunden ist.

2. Transporteinheit nach Anspruch 1, dadurch gekennzeichnet, daß die Antriebselemente (20, 19, 16, 22, 24, 27, 29, 30, 35) an den Schlitten (36 ; 37) angreifen.

3. Transporteinheit nach Anspruch 1 oder 2, dadurch gekennzeichnet, daß jede Mündungswerkzeughalterhälfte (55 ; 56) mit Haken (51 ; 52) auf den Schlitten (36; 37) gehängt und durch Positioniermittel (49 ; 50 ; 57) relativ zu dem Schlitten fixiert ist.

4. Transporteinheit nach Anspruch 3, dadurch gekennzeichnet, daß die Positioniermittel axiale Anschlagschultern (49 ; 50) des Schlittens (36 ; 37) und einen zwischen der Mündungswerkzeughalterhälfte (55 ; 56) und dem Schlitten (36 ; 37) wirksamen Verriegelungsbolzen (57) aufweisen.

5. Transporteinheit nach einem der Ansprüche 1 bis 4, dadurch gekennzeichnet, daß jede Mündungswerkzeughalterhälfte (55 ; 56) ein mit den Führungsstangen (13) verbindbares Kupplungsteil (53 ; 54) au einem Werkstoff von verhältnismäßig hoher Festigkeit und ein mit dem Kupplungsteil (53 ; 54) verbindbares Halteteil (58 ; 59) aufweist.

6. Transporteinheit nach einem der Ansprüche 1 bis 5, dadurch gekennzeichnet, daß jede Führungsstange (13) in ihrer Längsmitte in einem Lager (12) des Transportelements (8) gehalten ist.

7. Transporteinheit nach einem der Ansprüche 1 bis 6, dadurch gekennzeichnet, daß jeder Schlitten (36 ; 37) mit jeweils einer Führungsbuchse (40, 40 ; 41, 41) auf jeder Führungsstange (13) gleitet.

8. Transporteinheit nach einem der Ansprüche 1 bis 7, dadurch gekennzeichnet, daß die Schlitten (36 ; 37) durch wenigstens eine Schließfeder (45 ; 104) in ihre die wenigstens eine Mündungsform (2 ; 3) schließende Stellung vorgespannt sind.

9. Transporteinheit nach Anspruch 8, dadurch gekennzeichnet, daß jeweils eine Schließfe- der (104) zwischen einem Lager (102) des Trans- portelements (8) und dem benachbarten Schlitten (36 ; 37), z. B. konzentrisch mit einer der Führungsstangen (13), angeordnet ist.

10. Transporteinheit nach Anspruch 8 in Verbindung mit Anspruch 6, dadurch gekennzeichnet, daß jede Führungsstange (13) rohrförmig ausgebildet ist und in ihrem Innenraum eine Schließfeder (45) aufnimmt, die jeweils an ein äußeres Ende der Schlitten angeschlossen (vgl. 46, 47, 48) ist.

11. Transporteinheit nach einem der Ansprüche 1 bis 10, dadurch gekennzeichnet, daß die Antriebselemente eine in dem Transportelement (8) drehbar gelagerte Welle (16) aufweisen, die einerseits über einen Hebel (19) eine durch wenigstens ein an der Maschine geführtes, durch einen Hubmechanismus (21') heb- und senkba- res Kurvenstück (21) betätigbare Antriebs- rolle (20) und andererseits eine mit zwei symmetrisch zur Längsachse (23) der Welle (16) angeordneten Schaltzapfen (24, 24) ausgerüstete Schaltplatte (22) trägt, und daß an jedem Schaltzapfen (24, 24) und an dem zugehörigen Schlitten (36 ; 37) unter Zwischenschaltung eines Federelements ein U-förmiger Bügel (29 ; 30) angelenkt ist, wobei Schenkel (28, 33) der Bügel (29 ; 30) zueinandergekehrt und ineinanderschachtelbar sind.

12. Transporteinheit nach Anspruch 11, dadurch gekennzeichnet, daß jedes Federelement einen den zugehörigen Bügel (29 ; 30) durchdringenden Bolzen (27) mit einem auf dem zu- gehörigen Schaltzapfen (24) gelagerten Au- ge (26) aufweist, und daß zwischen dem Bolzen (27) und dem Bügel (29 ; 30) eine den Bügel (29 ; 30) auf Zug belastende Federanordnung (32) vorgesehen ist.

## Claims

1. Transport unit (1) for at least one neckring mould (2 ; 3), movable along a track and comprising a bipartite neck-ring die, of a machine for the manufacture of hollow articles of glass or similar thermoplastic material, wherein each neck-ring die half (4 ; 5) is suspended on a neck-ring die holder half (55 ; 56) and each neck-ring die-holder half (55 ; 56) is mounted for displacement relative to guide rods (13) of a transport element (8) by drive elements (20, 19, 16, 22, 24, 27, 29, 30, 35) between a closed end position and an open end position and is lockable at least in the closed end position by a locking mechanism, characterised in that each neck-ring die-holder half (55 ; 56) is releasably connected to a carriage (36 ; 37) mounted displaceably on the guide rods (13).

2. Transport unit according to claim 1, characterised in that the drive elements (20, 19, 16, 22, 24, 27, 29, 30, 35) are engaged with the carriages (36 ; 37).

3. Transport unit according to claim 1 or 2, characterised in that each neck-ring die holder half (55 ; 56) is suspended on the respective carriage (36 ; 37) by hooks (51 ; 52) and is fixed by positioning means (49 ; 50 ; 57) relative to the carriage.

4. Transport unit according to claim 3, characterised in that the positioning means comprise axial abutment shoulders (49 ; 50) on the carriage (36 ; 37) and a locking bolt (57) operative between each neck-ring die holder half (55 ; 56) and the respective carriage (36 ; 37).

5. Transport unit according to one of claims 1 to 4, characterised in that each neck-ring die holder half (55 ; 56) comprises a coupling part (53 ; 54) connectable with the guide rods (13) and of a material of relatively high strength and a holding part (58 ; 59) connectable with the coupling part (53 ; 54).

6. Transport unit according to one of claims 1 to 5, characterised in that each guide rod (13) is mounted at the mid-point of its length in a bearing (12) of the transport element (8).

7. Transport unit according to one of claims 1 to 6, characterised in that each carriage (36 ; 37) is provided with a respective guide sleeve (40, 40 ; 41, 41) and is thereby slidable on the respective guide rod (13).

8. Transport unit according to one of claims 1 to 7, characterised in that the carriages (36 ; 37) are biased by at least one closure spring (45 ; 104) into their positions closing said at least one neck-ring mould (2 ; 3).

9. Transport unit according to claim 8, characterised in that respectively one closure spring (104) is arranged between a bearing (102) of the transport element (8) and the adjacent carriage (36 ; 37), for example concentrically with respect to one of the guide rods (13).

10. Transport unit according to claim 8 in combination with claim 6, characterised in that each guide rod (13) is tubular and is provided internally with a closure spring (45), each closure spring being connected (at 46, 47, 48) to an outer end of the carriages.

11. Transport unit according to one of claims 1 to 10, characterised in that the drive elements comprise a shaft (16) mounted for rotation in the transport element (8), said shaft carrying on the one hand by means of a lever (19) a drive roller (20) actuatable by at least one curved member (21) guided on the machine and able to be raised and lowered by a lifting mechanism (21'), and carrying on the other hand a switch plate (22) fitted with two switch pins (24, 24) arranged symmetrically with respect to the longitudinal axis (23) of the shaft (16), and in that a U-shaped bracket (29 ; 30) is coupled to each switch pin (24, 24) and to the associated carriage (36 ; 37) through the intermediary of a spring element, wherein arms (28, 33) of the brackets (29 ; 30) face towards each other and are insertable in one another.

12. Transport unit according to claim 11, characterised in that each spring element comprises a bolt (27) extending through the associated bracket (29 ; 30) with an eye (26) mounted on the associated switch pin (24), and in that a spring arrangement (32) subjecting the bracket (29 ; 30) to tension is provided between the bolt (27) and the bracket (29 ; 30).

**Revendications**

1. Unité de transport (1) pour au moins un moule de goulot (2, 3) présentant un outil de goulot divisé en deux moitiés, qui peut se déplacer le long d'une trajectoire, appartenant à une machine pour la fabrication de corps creux en verre ou en matières thermoplastiques analogues, chaque demi-outil de goulot (4, 5) étant suspendu à un demi-porte-outil de goulot (55, 56) et chaque demi-porte-outil de goulot (55, 56) étant monté mobile en translation par rapport à des barres de guidage (13) d'un élément de transport (8), sous l'action d'éléments d'entraînement (20, 19, 16, 22, 24, 27, 29, 30, 35) entre une position d'extrémité fermée et une position d'extrémité ouverte, et peut être verrouillé par un mécanisme de verrouillage au moins dans la position extrême fermée, caractérisé en ce que chaque demi-porte-outil de goulot (55, 56) est relié de façon séparable à un chariot (36, 37) monté mobile en translation sur les barres de guidage (13).

2. Unité de transport selon la revendication 1, caractérisée en ce que les éléments d'entraînement (20, 19, 16, 22, 24, 27, 29, 30, 35) attaquent les chariots (36, 37).

3. Unité de transport selon l'une des revendications 1 ou 2, caractérisée en ce que chaque demi-porte-outil de goulot (55, 56) est suspendu à l'aide de crochets (51, 52) sur le chariot (36, 37) et est fixé relativement au chariot par des moyens de positionnement (49, 50, 57).

4. Unité de transport selon la revendication 3, caractérisée en ce que les moyens de positionnement présentent des épaulements de butée axiaux (49, 50) du chariot (36, 37) et une tige de verrouillage (57) qui agit entre le demi-porte-outil de goulot (55, 56) et le chariot (36, 37).

5. Unité de transport selon l'une des revendications 1 à 4, caractérisée en ce que chaque demi-outil de goulot (55, 56) présente un élément d'accouplement (53, 54) pouvant être relié aux barres de guidage (13) et réalisé en une matière d'une résistance relativement élevée et un élément de retenue (58, 59) pouvant être relié à l'élément d'accouplement (53, 54).

6. Unité de transport selon l'une des revendications 1 à 5, caractérisée en ce que chaque barre de guidage (13) est tenue au milieu de sa longueur dans une portée (12) de l'élément de transport (8).

7. Unité de transport selon l'une des revendications 1 à 6, caractérisée en ce que chaque chariot (36, 37) glisse au moyen d'une douille de guidage (40, 41) sur chaque barre de guidage (13).

8. Unité de transport selon l'une des revendications 1 à 7, caractérisée en ce que les chariots (36, 37) sont précontraints par au moins un ressort de fermeture (45, 104) dans leur position qui ferme au moins un moule de goulot (2, 3).

9. Unité de transport selon la revendication 8, caractérisée en ce qu'un ressort de fermeture (104) est monté entre une portée (102) de l'élément de transport (8) et le chariot (36, 37) adjacent, par exemple concentriquement à l'une des barres de guidage (13).

10. Unité de transport selon les revendications 6 et 8, caractérisée en ce que chaque barre de guidage (13) est de forme tubulaire et reçoit dans son volume intérieur un ressort de fermeture (45) qui est relié à une extrémité extérieure des chariots (voir 46, 47, 48).

11. Unité de transport selon l'une des revendications 1 à 10, caractérisée en ce que les éléments d'entraînement présentent un arbre (16) monté rotatif dans l'élément de transport (8) et qui porte d'une part, par l'intermédiaire d'un levier (19), un galet d'entraînement (20) pouvant être actionné par au moins une came (21) guidée sur la machine et qui peut être élevée et abaissée par un mécanisme élévateur (21') et, d'autre part, une plaque de commande (22) équipée de deux doigts de commande (24, 24) disposés symétriquement par rapport à l'axe longitudinal (23) de l'arbre (16) et en ce que, sur chaque doigt de commande (24, 24) et sur le chariot correspondant (36, 37) est articulé, avec interposition d'un élément élastique, un étrier (29, 30) en forme de U, les branches (28, 33) des étriers (29, 30) étant dirigées l'une vers l'autre et pouvant être emboîtées l'une dans l'autre.

12. Unité de transport selon la revendication 11, caractérisée en ce que chaque élément élastique présente un doigt (27) qui traverse l'étrier (29, 30) correspondant, ainsi qu'un œil (26) monté sur le doigt de commande (24) correspondant et en ce que, entre le doigt (27) et l'étrier (29, 30), est prévu un dispositif élastique (32) qui sollicite l'étrier (29, 30) à la traction.

Fig. 1

**Fig. 2**

Fig. 3

Fig. 4

0 043 034

Fig. 5

Fig. 6

Fig. 7

Fig. 8

Fig. 9

7

Fig.10

Fig. 12

Fig. 13

Fig. 11

# Fig. 14